# EUROPEAN PATENT APPLICATION

(11) **EP 4 810 785 A1**
(43) Date of publication of application: **23.09.2026**
(21) Application number: 23958716.5
(22) Date of filing: 05.12.2023
(51) Int. Cl.: F02D 41/04, F02P 19/02, F02N 19/02

(54) **METHANOL ENGINE AND CONTROL METHOD**

(30) Priority: 13.11.2023 CN 202311501474
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Angerhausen, Christoph
(86) International application number: PCT/CN2023/136387
(87) International publication number: WO 2025/102447

(57) **Abstract**

Disclosed in the present invention is a methanol engine. The methanol engine comprises a methanol fuel system, a compression-ignition engine and an electronic control unit, wherein on the basis of a collected operating condition, the electronic control unit controls the methanol fuel system to inject fuel into a cylinder of the compression-ignition engine. The methanol engine is characterized by further comprising a temperature-controllable hot-surface combustion-supporting system in communication connection with the electronic control unit, wherein the hot-surface combustion-supporting system heats methanol sprayed into the cylinder and adjusts a heating temperature on the basis of the operating condition. The present invention has the advantages of performing autonomous temperature measurement and accurate temperature control, being unaffected by operating conditions and environmental changes, having a long service life, being less prone to aging, etc.; the present invention fills in the gaps of reliable ignition and running in stable operating conditions where existing methanol engines cannot use 100% of methanol fuel; moreover, 30 to 50% of fuel costs are reduced, and the heat efficiency reaches up to 47% or more; and the emission of a pure methanol automobile is free of soot, such that the emission of NOx is reduced by 45%. Further provided in the present invention is a control method for a methanol engine.

## Description

### TECHNICAL FIELD

The present disclosure relates to a methanol engine, and particularly, to a methanol engine with a hot-surface combustion-assisting system and a method for controlling the same.

### BACKGROUND

Methanol, as a new type of clean energy, can replace gasoline and diesel and is applicable to various motor vehicles, cooking stoves, and boilers. Methanol is mainly produced from coal, natural gas, coalbed methane, coke oven gas, etc. In particular, producing methanol with high-sulfur, low-grade coal and coke oven gas can improve comprehensive resource utilization and reduce environmental pollution. Compression ignition engines have significant advantages of high torque and power, high energy density, and high thermal efficiency, but are unable to directly ignite clean fuels such as pure methanol, LNG, and ammonia via compression ignition.

Chinese Patent Document CN 101629533 A discloses a methanol engine fuel supply system. The fuel supply system comprises a methanol fuel injector (1), a methanol fuel pump (7), a methanol fuel tank (8), a methanol fuel rail (5), an intake manifold assembly (15), and a throttle body assembly (14), characterized in that, the fuel supply system further comprises a gasoline supply apparatus which comprises a gasoline small fuel tank (10), a gasoline pump (11) located in the gasoline small fuel tank, a gasoline small fuel rail (13), and at least one gasoline fuel injector (12) mounted on the gasoline small fuel rail (13). Moreover, a method for controlling the fuel supply system is further disclosed. The present disclosure has the advantages of a simple structure, operational convenience, high reliability, and ease of realization, and effectively solves the problem of low-temperature starting difficulty in methanol engines.

Chinese Patent Document CN 206555044 U further discloses a methanol engine fuel supply system, comprising a main fuel supply system, an auxiliary fuel supply system, an intake manifold, and a cylinder block. The main fuel supply system comprises a methanol tank, a methanol pump, a methanol rail, and a methanol fuel injector. The auxiliary fuel supply system comprises a gasoline tank, a gasoline pump, a gasoline rail, and a gasoline fuel injector. The methanol fuel injector is connected to the methanol pump via the methanol rail, and the gasoline fuel injector is connected to the gasoline pump via the gasoline rail. The gasoline fuel injector is mounted on the intake manifold and extends through the intake manifold to be in communication with an intake passage. The gasoline fuel injector is configured to inject gasoline into the intake passage during engine startup and to stop injecting upon successful engine startup. The methanol fuel injector is mounted on a cylinder head of the cylinder block and extends through the cylinder head to be in communication with the interior of the cylinder. The methanol fuel injector is configured to start injecting methanol into the cylinder upon successful engine startup.

Although the two Chinese patent documents hereinabove enable the ignition of methanol fuel, neither is capable of directly igniting methanol. Instead, both systems rely on gasoline as an auxiliary fuel, wherein the engine is first ignited using gasoline, and methanol is subsequently introduced as the main fuel to perform work. However, this dual-fuel method suffers from the problems of limited fuel cost savings, minimal emission reductions, and high overall costs.

### SUMMARY

To solve the technical problem of excessive emissions caused by the need for gasoline as an auxiliary fuel during the startup of a methanol engine in the prior art, the present disclosure provides a methanol engine, comprising a methanol fuel system, a compression ignition engine, and an electronic control unit, on the basis of acquired operating conditions, the electronic control unit controlling the methanol fuel system to inject fuel into a cylinder of the compression ignition engine, wherein the methanol engine further comprises a temperature-controllable hot-surface combustion-assisting system which is communicatively connected to the electronic control unit, and wherein the temperature-controllable hot-surface combustion-assisting system heats the methanol injected into the cylinder and adjusts heating temperature on the basis of the operating conditions.

In this solution, the methanol injected into the cylinder is heated by the temperature-controllable hot-surface combustion-assisting system. The elevated temperature of the heated methanol enables it to be ignited and perform work. Moreover, the rising temperature in the cylinder further induces compression ignition of fuel in other regions of the combustion chamber in which the cylinder is located, thereby enabling it to perform work. Compared with the dual-fuel startup method in the prior art, this solution enables reliable ignition and stable operation of the methanol engine under operating conditions where fuel is 100% methanol, while achieving a fuel cost reduction of 30% to 50% and a thermal efficiency of 47% or more. Furthermore, vehicles powered solely by methanol produce no soot emissions, and NOx emissions are reduced by 45%.

Preferably, the hot-surface combustion-assisting system comprises a temperature-controllable heating element and a controller communicatively connected to the electronic control unit, the controller controlling heating temperature of the temperature-controllable heating element on the basis of the operating conditions. In this solution, the controller, working together with the temperature-controllable heating element, promptly adjusts the heating temperature of the hot-surface combustion-assisting system, thereby ensuring reliable engine ignition while also prolonging the service life of the hot-surface combustion-assisting system.

Preferably, the methanol fuel system comprises a fuel tank, a fuel delivery pump, a high-pressure common rail, and an injector nozzle, the injector nozzle extending into the cylinder; by the fuel delivery pump, methanol in the fuel tank is pressurized to form high-pressure fuel and the high-pressure fuel is delivered to the high-pressure common rail and is then injected by the injector nozzle. In this solution, the fuel supply with a high-pressure common rail omits a boosting mechanism inside the fuel injector, thereby reducing engine costs. Moreover, because high pressure continuously exists in the common rail chamber, the driving torque required by the high-pressure fuel pump is much smaller than that of a conventional fuel pump.

Preferably, the fuel delivery pump comprises a low-pressure auxiliary pump and a high-pressure pump, the low-pressure auxiliary pump pumps the methanol in the fuel tank to a low-pressure side of the high-pressure pump, and a high-pressure pump plunger of the high-pressure pump pressurizes the methanol to form high-pressure fuel and supplies the high-pressure fuel to the high-pressure common rail. Given the low viscosity of methanol, the low-pressure auxiliary pump is further provided in this solution to ensure smooth methanol fuel delivery, thereby guaranteeing stable operation of the methanol engine.

Preferably, a filter is provided on a fuel line between the low-pressure auxiliary pump and the high-pressure pump. In this solution, the filter is used to remove impurities and moisture from the methanol, avoiding the entry of such impurities into the engine, thereby protecting the engine and prolonging its service life.

Preferably, a return fuel line is provided between the high-pressure pump and the fuel tank, and during the supply of the methanol to the high-pressure common rail by the high-pressure pump, excess methanol in the high-pressure pump is returned to the fuel tank via the return fuel line. In this solution, the provision of the return fuel line enables the circulation of methanol fuel, thereby avoiding the accumulation of excess methanol fuel in the fuel duct.

Preferably, a metering unit configured to regulate the amount of fuel delivered is further provided on the fuel line of the methanol fuel system. Given that the power demand of the methanol engine varies under different operating conditions, in this solution, a metering unit is used to regulate the amount of fuel delivered by the methanol fuel system, thereby enabling the methanol engine to adapt to various operating conditions while maintaining a simple structure.

Preferably, a protective layer is provided on high-pressure moving components of the methanol fuel system. In this solution, the provision of the protective layer can prolong the service life of the high-pressure moving components.

Preferably, the fuel line of the methanol fuel system comprises a fuel expansion-resistant and pressure-resistant fuel duct and a sealing member, the fuel tank is a corrosion-resistant fuel tank, and/or the filter is a corrosion-resistant filter. In this solution, the service life of fuel duct, sealing member, and filter can be prolonged through the selection of their material.

Preferably, the injector nozzle is provided with a large-diameter injection orifice. Given that the calorific value of methanol is much lower than that of diesel, in this solution, large-diameter injection orifices are used to increase the amount of methanol injected, thereby ensuring the engine delivers sufficient output power.

Preferably, on the basis of an injection pulse width and an injection advance angle calculated on the basis of the operating conditions, the electronic control unit controls the injector nozzle to inject methanol. In this solution, the electronic control unit controls, on the basis of the operating conditions, the injector nozzle to inject methanol, ensuring reliable ignition, stable operation under operating conditions, and prolonged service life of the methanol engine.

In a second aspect, the present disclosure further provides a method for controlling a methanol engine as described, wherein the control method comprises: by a fuel delivery pump, pressurizing methanol in a fuel tank to form high-pressure fuel and delivering the high-pressure fuel to a high-pressure common rail; controlling, by an electronic control unit on the basis of an injection pulse width and an injection advance angle obtained from acquired operating conditions, an injector nozzle to inject methanol into a cylinder of a compression ignition engine; during operation of the compression ignition engine, continuously electrically powering a temperature-controllable electronic element to perform heating; and controlling, by a controller on the basis of the operating conditions, heating temperature of the temperature-controllable heating element and heating the methanol injected into the cylinder.

The present disclosure has the following advantageous effects:
1. After providing the hot-surface combustion-assisting system, the present disclosure has the advantages of self-temperature measurement and precise temperature control, remaining unaffected by operating conditions and environmental variations, with a long service life and strong resistance to aging. It addresses the limitation of the existing methanol engines which are unable to achieve reliable ignition and stable operation under operating conditions where fuel is 100% methanol, while achieving a fuel cost reduction of 30% to 50% and a thermal efficiency of 47% or more. Furthermore, vehicles powered solely by methanol produce no soot emissions, and NOx emissions are reduced by 45%.
2. The present disclosure replaces and treats the components of the methanol fuel system that are prone to corrosion and wear, thereby prolonging the service life of the methanol fuel system.
3. The present disclosure partially adjusts the flow cross-sectional area of the injector nozzle and the control parameters of the electronic control unit, ensuring reliable ignition, stable operation under operating conditions, and prolonged service life of the methanol engine.

### BRIEF DESCRIPTION OF THE DRAWINGS

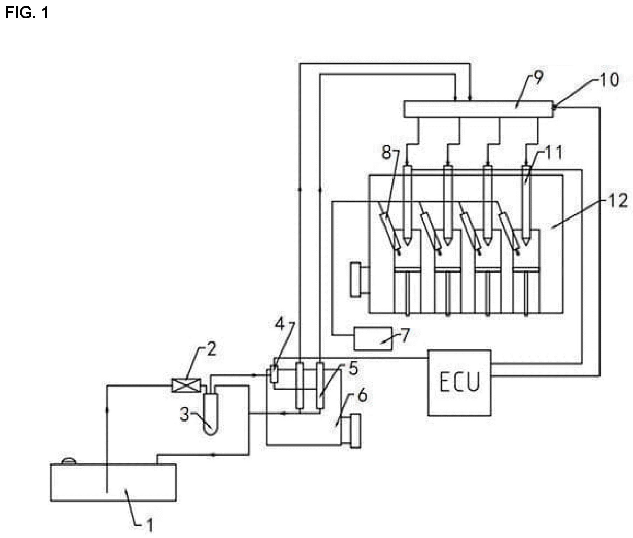

FIG. 1 is a schematic diagram of a methanol engine according to an embodiment of a methanol engine and a method for controlling the same of the present disclosure.

### DETAILED DESCRIPTION OF THE EMBODIMENTS

The present disclosure is described in further detail with reference to specific embodiments.

### 1. Definition

An electronic control unit (ECU), i.e., an onboard computer, comprises a microcontroller and peripheral circuits.

A compression ignition engine is a type of internal combustion engine in which autoignition of the air-fuel mixture is achieved by the high temperature and high pressure of in the interior -of the cylinder charge at the end of the compression stroke, rather than by spark ignition.A temperature-controllable heating element is a heating element with self-temperature measurement and precise temperature control, and is a temperature-controllable electric glow plug.

High-pressure common rail: Electronic fuel injection technology is a fuel supply method in which the generation of injection pressure and the injection process are completely separated within a closed-loop system composed of a high-pressure fuel pump, a pressure sensor, and an electronic control unit (ECU). Common rail technology refers to a system in which a high-pressure fuel pump delivers high-pressure fuel to a common fuel supply duct. By precisely controlling the fuel pressure within the common fuel supply duct, the pressure in the high-pressure fuel duct is maintained independently of engine speed. This greatly reduces the variation in fuel supply pressure caused by engine rotational speed changes in traditional diesel engines, thereby mitigating their inherent drawbacks. The ECU controls the amount of fuel injected by the fuel injector, which depends on the pressure in the fuel rail (common fuel supply duct) and the duration of the solenoid valve opening.

Injection pulse width refers to the duration of each fuel injection by the fuel injector controlled by the engine control unit. It is a primary indicator indicating whether the engine fuel injector is operating normally.

Injection advance angle refers to the angle of rotation of the crankshaft from the start of fuel injection by the fuel injector into the cylinder (marked by a needle valve of the fuel injector extending) to the piston reaching the top dead center during engine operation.

2. The reference numerals in the drawings of the description comprise: 1. Fuel tank; 2. Low-pressure auxiliary pump; 3. Filter; 4. Metering unit; 5. High-pressure pump plunger; 6. High-pressure pump; 7. Control unit; 8. Temperature-controllable heating element; 9. High-pressure common rail; 10. Pressure sensor; 11. Injector nozzle; 12. Compression ignition engine.

An embodiment is basically shown in FIG. 1: A methanol engine comprises a methanol fuel system, a compression ignition engine 12, an electronic control unit 7, and a temperature-controllable hot-surface combustion-assisting system communicatively connected to the electronic control unit 7. On the basis of acquired operating conditions, the electronic control unit 7 controls the methanol fuel system to inject fuel into a cylinder of the compression ignition engine 12, and the hot-surface combustion-assisting system heats the methanol injected into the cylinder and adjusts heating temperature on the basis of the operating conditions. The operating conditions are acquired through a pressure sensor 10 provided on a high-pressure common rail 9, as well as other sensors communicatively connected to the electronic control unit 7, and comprise pressure signals, the rotational speed of the compression ignition engine 12, coolant temperature, and the like.

In particular, the methanol fuel system comprises a fuel tank 1, a fuel delivery pump, a high-pressure common rail 9, an injector nozzle 11, and fuel lines connecting the components. The fuel delivery pump comprises a low-pressure auxiliary pump 2 and a high-pressure pump 6. A filter 3 and a metering unit 4 are provided on the fuel line between the low-pressure auxiliary pump 2 and the high-pressure pump 6. A return fuel line is further provided between the high-pressure pump 6 and the fuel tank 1. The low-pressure auxiliary pump 2 pumps the methanol in the fuel tank 1 to a low-pressure side of the high-pressure pump 6, and a high-pressure pump plunger 5 of the high-pressure pump 6 pressurizes the methanol to form high-pressure fuel and supplies the high-pressure fuel to the high-pressure common rail 9, and the high-pressure fuel is then injected by the injector nozzle 11. During the supply of the methanol to the high-pressure common rail 9 by the high-pressure pump 6, excess methanol in the high-pressure pump 6 is returned to the fuel tank 1 via the return fuel line.

A protective layer is provided on high-pressure moving components of the methanol fuel system. The fuel line of the methanol fuel system comprises a fuel expansion-resistant and pressure-resistant fuel duct and a sealing member, the fuel tank 1 is a corrosion-resistant fuel tank 1, and/or the filter 3 is a corrosion-resistant filter 3.

The hot-surface combustion-assisting system comprises a temperature-controllable heating element 8 and a controller communicatively connected to the electronic control unit 7, the controller controlling heating temperature of the temperature-controllable heating element 8 on the basis of the operating conditions.

On the basis of an injection pulse width and an injection advance angle calculated on the basis of the operating conditions, the electronic control unit 7 controls the injector nozzle 11 to inject methanol.

On the basis of the described methanol engine, the embodiment further discloses a method for controlling a methanol engine, wherein the control method comprises: by a fuel delivery pump, pressurizing methanol in a fuel tank to form high-pressure fuel and delivering the high-pressure fuel to a high-pressure common rail; controlling, by an electronic control unit on the basis of an injection pulse width and an injection advance angle obtained from acquired operating conditions, an injector nozzle to inject fuel into a cylinder of a compression ignition engine; during operation of the compression ignition engine, continuously electrically powering a temperature-controllable electronic element to perform heating; and controlling, by a controller on the basis of the operating conditions, heating temperature of the temperature-controllable heating element and heating the methanol injected into the cylinder.

The specific implementation process is as follows: during operation of the methanol engine, the low-pressure auxiliary pump 2 supplies methanol from the fuel tank 1 via the filter 3 and the metering unit 4 to the low-pressure side of the high-pressure pump 6. The high-pressure pump plunger 5 then pressurizes the methanol to form high-pressure fuel and supplies the high-pressure fuel to the high-pressure common rail 9. During this process, excess methanol is returned to the fuel tank 1 via the return fuel line.

The electronic control unit 7 acquires a pressure signal via the pressure sensor 10, along with signals such as the rotational speed and operating conditions of the compression ignition engine 12, and then calculates an injection pulse width and an injection advance angle of the injector nozzle 11. On the basis of the injection pulse width and the injection advance angle, the electronic control unit then controls the injector nozzle 11 to inject methanol into the cylinder.

During operation of the methanol engine, the hot-surface combustion-assisting system is continuously electrically powered to perform heating. The controller controls the heating temperature of the temperature-controllable heating element 8 on the basis of the operating conditions to ensure that the methanol injected into the cylinder is ignited. The rising temperature in the cylinder further induces compression ignition of fuel in other regions of the combustion chamber, thereby enabling it to perform work.

The foregoing description merely illustrates embodiments of the present disclosure. Specific structures and characteristics well known in the art are not described in detail. A person of ordinary skill in the art is deemed to have all general technical knowledge in the relevant field relevant to the present disclosure before the filing date or priority date, to be familiar with all prior art in the field, and to possess the ability to apply conventional experimental techniques available before that date. Such a person may, in light of the teachings of the present application and in combination with their knowledge and skills, improve and implement this solution. Accordingly, certain typical well-known structures or methods are not to constitute obstacles to the implementation of the present disclosure by a person of ordinary skill in the art. It is to be noted that those skilled in the art may make various modifications and improvements to the present disclosure without departing from its structure. Such modifications and improvements are intended to be encompassed within the scope of protection of the present disclosure and do not affect the effectiveness of its implementation or the practical applicability of the patent. The scope of protection sought by the present application shall be defined by the claims, and the specific embodiments and other descriptions disclosed in the description may be used to interpret the claims.

## Claims

1. A methanol engine, comprising a methanol fuel system, a compression ignition engine, and an electronic control unit, on the basis of acquired operating conditions, the electronic control unit controlling the methanol fuel system to inject fuel into a cylinder of the compression ignition engine, wherein the methanol engine further comprises a temperature-controllable hot-surface combustion-assisting system which is communicatively connected to the electronic control unit, and wherein the temperature-controllable hot-surface combustion-assisting system heats the methanol injected into the cylinder and adjusts heating temperature on the basis of the operating conditions.

2. The methanol engine according to claim 1, wherein the hot-surface combustion-assisting system comprises a temperature-controllable heating element and a controller communicatively connected to the electronic control unit, the controller controlling heating temperature of the temperature-controllable heating element on the basis of the operating conditions.

3. The methanol engine according to claim 1 or 2, wherein the methanol fuel system comprises a fuel tank, a fuel delivery pump, a high-pressure common rail, and an injector nozzle, the injector nozzle extending into the cylinder; wherein by the fuel delivery pump, methanol in the fuel tank is pressurized to form high-pressure fuel and the high-pressure fuel is delivered to the high-pressure common rail and is then injected by the injector nozzle.

4. The methanol engine according to claim 3, wherein the fuel delivery pump comprises a low-pressure auxiliary pump and a high-pressure pump, wherein the low-pressure auxiliary pump pumps the methanol in the fuel tank to a low-pressure side of the high-pressure pump, and a high-pressure pump plunger of the high-pressure pump pressurizes the methanol to form high-pressure fuel and supplies the high-pressure fuel to the high-pressure common rail.

5. The methanol engine according to claim 4, wherein a filter is provided on a fuel line between the low-pressure auxiliary pump and the high-pressure pump.

6. The methanol engine according to claim 5, wherein a return fuel line is provided between the high-pressure pump and the fuel tank, and wherein during the supply of the methanol to the high-pressure common rail by the high-pressure pump, excess methanol in the high-pressure pump is returned to the fuel tank via the return fuel line.

7. The methanol engine according to claim 6, wherein a metering unit configured to regulate the amount of fuel delivered is further provided on the fuel line of the methanol fuel system.

8. The methanol engine according to claim 7, wherein a protective layer is provided on high-pressure moving components of the methanol fuel system.

9. The methanol engine according to claim 8, wherein the fuel line of the methanol fuel system comprises a fuel expansion-resistant and pressure-resistant fuel duct and a sealing member, wherein the fuel tank is a corrosion-resistant fuel tank, and/or the filter is a corrosion-resistant filter.

10. The methanol engine according to claim 9, wherein the injector nozzle is provided with a large-diameter injection orifice.

11. The methanol engine according to claim 10, wherein on the basis of an injection pulse width and an injection advance angle calculated on the basis of the operating conditions, the electronic control unit controls the injector nozzle to inject methanol.

12. A method for controlling a methanol engine according to any one of claims 1 to 11, wherein the control method comprises: by a fuel delivery pump, pressurizing methanol in a fuel tank to form high-pressure fuel and delivering the high-pressure fuel to a high-pressure common rail; controlling, by an electronic control unit on the basis of an injection pulse width and an injection advance angle obtained from acquired operating conditions, an injector nozzle to inject methanol into a cylinder of a compression ignition engine; during operation of the compression ignition engine, continuously electrically powering a temperature-controllable electronic element to perform heating; and controlling, by a controller on the basis of the operating conditions, heating temperature of the temperature-controllable heating element and heating the methanol injected into the cylinder.
